# FASCICULE DE BREVET EUROPEEN

(11) **EP 1 067 653 B1**
(45) Date de publication et mention de la délivrance du brevet: **18.10.2006**
(21) Numéro de dépôt: 00401794.3
(22) Date de dépôt: 22.06.2000
(51) Int. Cl.: H02J 7/00

(54) **Circuit de charge perfectionné d'une batterie pour un téléphone mobile**
Verbesserte Batterieladeschaltung für ein Mobiltelefon
Improved battery charger circuit for mobile telephone

(30) Priorité: 05.07.1999 FR 9909054
(43) Date de publication de la demande: 10.01.2001
(73) Titulaire: SAGEM Communication, 75015 Paris (FR)
(72) Inventeur: Romao, Fernando, 78360 Montesson (FR)
(74) Mandataire: Schmit, Christian Norbert Marie

(56) Documents cités:
- EP-A- 0 580 180
- EP-A- 0 665 443
- US-A- 5 633 574
- US-A- 5 747 969

## Description

L'invention a pour objet un téléphone mobile comportant un circuit de charge perfectionné d'une batterie. Le domaine de l'invention est celui des appareils autonomes fonctionnant sur batterie, et plus particulièrement celui des appareils autonomes dont l'autonomie doit être importante. C'est le cas dans la téléphonie mobile. Le but de l'invention est de réduire le nombre de composant et le coût du circuit de charge de la batterie.

Dans l'état de la technique on connaît un circuit de charge d'une batterie dont l'entrée est une diode, suivi d'un transistor bipolaire, ou a effet de champ. La diode est connectée à l'émetteur du transistor bipolaire. Entre l'émetteur et la base du transistor on connecte une résistance, et entre la base et la masse on connecte un transistor, CMOS par exemple. Le collecteur du transistor bipolaire est connecté à la batterie. Pour charger la batterie, on connecte la diode à une source de puissance, un générateur de courant par exemple.

Ce circuit présente deux inconvénients. Un premier inconvénient est la présence de la diode qui est très volumineuse et nuit donc à l'intégration. Sa présence est rendue nécessaire par le cas où on court-circuiterait à la masse l'entrée du circuit de charge. En effet la tension qui existerait alors aux bornes de l'émetteur et du collecteur du transistor bipolaire serait égale à la tension de batterie qui peut être supérieure à 5 volts. Dans ce cas le transistor bipolaire serait détruit et il n'y aurait plus moyen de recharger l'appareil autonome.

Le deuxième problème est un problème de perte de charge de la batterie. En effet les transistors réels ne sont pas parfaits, et il existe un courant de fuite entre le collecteur et la base. Ce courant de fuite, même s'il est faible, peut être comparé par exemple à la consommation d'un téléphone mobile en mode veille. L'existence de ce courant de fuite réduit donc l'autonomie du téléphone portable, dans le cas d'un court circuit en entrée du chargeur.

Dans l'état de la technique on connaît le document EP 0 580 180 A1.

L'invention résout ces problèmes, pour une part, en partant du constat qu'avec les technologies actuelles la majorité des batteries ont une tension inférieure à 5 volts. Il n'est donc plus nécessaire d'utiliser une diode de protection évitant les surtensions inverses. D'autre part, le deuxième problème est résolu en connectant en série avec la résistance un interrupteur. Cet interrupteur sera commandé en parallèle avec le transistor CMOS. Ainsi lors de la charge de la batterie, le transistor CMOS sera passant et l'interrupteur fermé. Lorsque la batterie n'est plus en charge, l'interrupteur est ouvert et le transistor CMOS est bloqué. Une solution alternative consiste à placer une résistance de forte valeur, de l'ordre de 100 mégohm, garantissant un courant inverse faible. Ainsi, selon l'invention, il existe entre l'émetteur et la base du transistor bipolaire une résistance infinie lorsque la batterie n'est plus en charge. Le courant de fuite devient donc nul. De plus la résistance est dimensionnée de telle sorte que la constante de temps du circuit de charge permette une charge de la batterie en mode pulsé. L'invention résout ainsi tous les problèmes liés aux précédents modes de réalisation. Notamment le circuit de charge de a batterie est un système de charge sans diode de protection contre les surtensions inverses.

L'invention a donc pour objet un téléphone mobile comportant un circuit de charge perfectionné d'une batterie comportant:
- un générateur de courant connecté entre une masse et une première borne d'un dispositif de commande,
- une résistance connectée entre la première borne et une deuxième borne du dispositif de commande,
- un premier interrupteur connecté entre la deuxième borne et la masse,
- une troisième borne du dispositif de commande est connectée à une batterie,
caractérisé en ce que la résistance est connectée en série, entre la première et la deuxième borne, avec un deuxième interrupteur.

L'invention sera mieux comprise à la lecture de la description qui suit et à l'examen des figures qui l'accompagnent. Celles-ci ne sont présentées qu'à titre indicatif et nullement limitatif de l'invention. Les figures montrent :
Figure 1 : une illustration d'un circuit de charge selon l'invention, et des moyens nécessaires à sa réalisation.
Figure 2 : une illustration d'un circuit permettant de mesurer le niveau de la batterie.
Figure 3 : une illustration des périodes où le circuit de charge est passant dans une charge en mode pulsé.

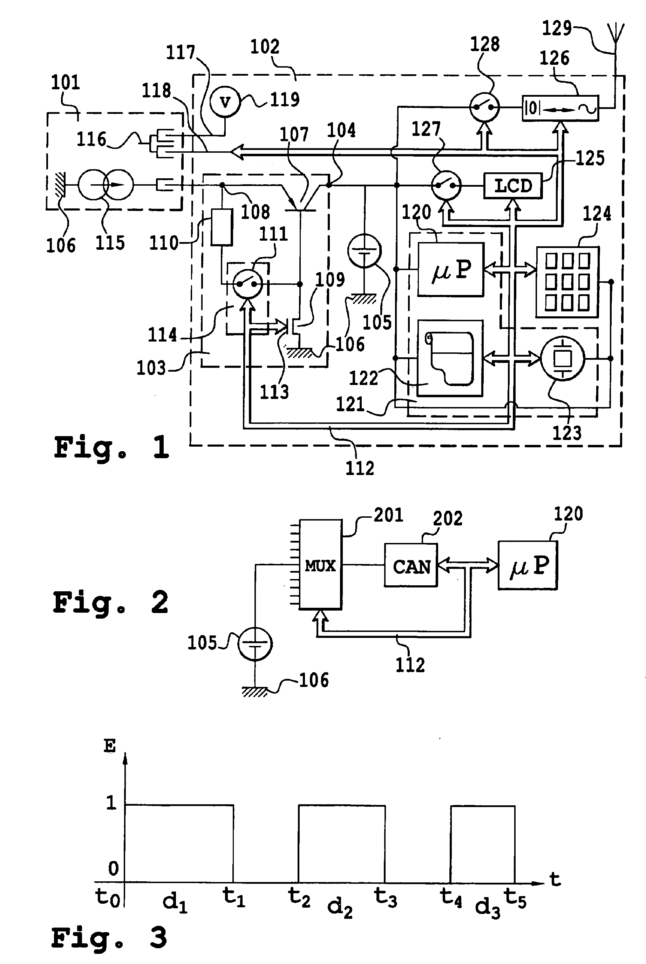

La figure 1 montre un chargeur 101 et un téléphone mobile 102. Le téléphone 102 comporte un circuit 103 de charge connecté par une sortie 104 à une batterie 105. La batterie 105 est d'autre part connectée à une masse 106. Le circuit 103 comporte un dispositif 107 de commande qui est un transistor bipolaire. Il s'agit donc bien d'un dispositif de commande à trois bornes. Une entrée 108 du circuit 103 correspond à l'émetteur du transistor 107, la sortie 104 du dispositif 103 correspond au collecteur du transistor 107. La base du transistor 107 est connectée à la masse via un transistor 109 de type transistor à effet de champ. L'émetteur 108 du transistor 107 est connecté à la base du transistor 107 via une résistance 110 et un interrupteur 111. L'interrupteur 111 et la résistance 110 sont connectés en série. L'interrupteur 111 et le transistor 109 sont commandés par l'intermédiaire d'un bus 112. Le bus 112 contient des fils ou pistes correspondant à des signaux d'adresses, de données et de commandes. Le transistor 109 est commandé via sa grille 113. L'interrupteur 111 et le bus 112 forment un dispositif 114 de suppression. Dans la pratique l'interrupteur 111 est réalisé grâce à un transistor ou tout autre moyen de commutation connu. De même le transistor 109 est un moyen de commutation pour ouvrir et fermer un circuit.

Le chargeur 101 comporte un générateur 115 de courant. Par générateur de courant on entend tout dispositif délivrant un courant à composante continue non nulle. Lorsque le chargeur 101 et le téléphone 102 sont connectés, le générateur 115 est connecté d'une part à l'émetteur 108 du transistor 107, d'autre part à la masse 106. Le chargeur 101 comporte aussi un cavalier 116. Lorsque le téléphone 102 est en place sur le chargeur 101, le cavalier 116 court-circuite un picot 117 et un picot 118 du téléphone 102. Le picot 117 est connecté à un générateur de tension 119, le picot 118 est connecté au bus 112. Le téléphone 102 comporte aussi un microprocesseur 120 lui aussi connecté au bus 112. Le dispositif 116 à 119 est donc un dispositif de détection du fait que le téléphone 102 a été placé en charge. Le dispositif 116 à 119, ne fait qu'illustrer cette détection, dans la pratique elle peut être réalisée autrement.

Le téléphone 102 comporte aussi des moyens 121 pour gérer la charge de la batterie 105. Les moyens 121 comportent le microprocesseur 120, une mémoire 122 et une horloge 123. La mémoire 122 et l'horloge 123 sont connectées au bus 112. La mémoire 122 contient les codes instruction du programme qui permet au microprocesseur 120 de gérer la charge de la batterie 105. L'horloge 123 cadence l'activité du microprocesseur 120, elle peut être un quartz par exemple. La mémoire 122 comporte d'autre part les données et espaces de travail nécessaires à l'activité du microprocesseur 120.

Le téléphone 102 comporte aussi un clavier 124, un écran 125 à cristaux liquides (LCD), et un circuit 126 d'émission réception radiofréquence connecté à une antenne 129. Les éléments 125 à 126 sont connectés au bus 112.

Les éléments 120 et 122 à 126 sont alimentés par la batterie 105. Certains éléments, comme l'écran 125 et le circuit 126 sont, respectivement, connectés à la batterie 105 par l'intermédiaire d'interrupteurs 127 respectivement 128. Les interrupteurs 127 et 128 sont reliés au bus 112, afin de pouvoir être commandés par le microprocesseur 120.

Lors de la charge de la batterie 105, les éléments inutiles du téléphone 102, comme le circuit 126 par exemple, sont privés d'alimentation. Ainsi ils ne consomment plus d'énergie et le temps de charge de la batterie 105 s'en trouve diminué.

Cependant cela ne signifie pas que le téléphone n'est plus joignable. Il existe en effet, des circuits de veille de consommation minimale qui sont en permanence à l'écoute des informations que reçoit le téléphone 102 pendant ses divers rendez-vous temporels, tels que définis par la norme GSM, avec la station de base à laquelle il est connecté. Si ces informations signifient au téléphone mobile qu'il y a un appel entrant alors un programme contenu dans la mémoire 122 et exécuté par le microprocesseur 120 qui interrompt la charge de la batterie 105, réveille les circuits endormis du téléphone 102 et prend en compte l'appel entrant. De même si l'utilisateur souhaite effectuer un appel sortant, une pression sur une touche du clavier 124 va interrompre de la même manière la charge de la batterie 105 et permettre à l'utilisateur d'effectuer son appel sortant.

Avec l'évolution des technologies, et notamment l'intégration de plus en plus poussée, les circuits consomment de moins en moins. Pour des fonctionnalités identiques on a besoin de moins en moins de puissance électrique, voire pour plus de fonctionnalités on a besoin de moins de puissance que n'en réclamaient les premiers téléphones mobiles. On peut donc se permettre d'utiliser des batteries ayant des tensions inférieures à 5 volts. Cela permet notamment de ne pas avoir à protéger le transistor 107 contre les courts-circuits qui pourraient se produire entre son émetteur et la masse. En effet la jonction émetteur collecteur peut supporter une tension inférieure à 5 volts, pour un transistor bipolaire.

Lorsque l'utilisateur du téléphone 102 place celui-ci sur le chargeur 101, le microprocesseur 120 va détecter cette action, grâce au dispositif de détection, éléments 116 à 119. Le téléphone 102 va alors mesurer le niveau de charge de sa batterie.

La figure 2 illustre un circuit simple de mesure de la tension de la batterie 105. La figure 2 montre la batterie 105 connectée entre la masse 106 et une entrée d'un multiplexeur 201. La sortie du multiplexeur 201 est connectée à un convertisseur 202 analogique numérique. Le convertisseur analogique numérique est par ailleurs connecté au bus 112. Lorsque le microprocesseur 120 souhaite connaître la tension de la batterie 105, il positionne sur le bus 112 une adresse correspondant au multiplexeur 201, et indiquant au multiplexeur 201 que sa sortie doit correspondre à la batterie 105. Puis le microprocesseur lit la sortie du convertisseur 202. Il a alors à sa disposition la valeur de la tension de la batterie 105. Dans la pratique le dispositif décrit à la figure 2 peut être intégré en totalité ou en partie dans le microprocesseur 120. A partir de cette mesure, le microprocesseur 120 décide si oui ou non il faut charger la batterie 105. L'utilisateur est averti de cette décision, par un symbole sur l'écran 125 par exemple. Il peut s'agir d'une batterie figurative qui clignote lorsque la batterie 105 est en charge et qui ne clignote plus lorsque la batterie 105 est chargée. Dans cet exemple, si le microprocesseur 120 décide qu'il ne faut pas charger la batterie 105, le symbole figuratif ne clignotera pas. Si au contraire il faut charger la batterie, le symbole va clignoter.

Dans le cas où il faut charger la batterie, le microprocesseur 120 va commander l'interrupteur 111 et le transistor 109 afin qu'il passe en position fermée. Pour la présente description on considère qu'un transistor fermé signifie que le transistor est passant, alors qu'un transistor ouvert est bloqué. Le courant va alors passer à travers la résistance 110, créant une tension à ses bornes, ce qui va faire basculer le transistor 107 en mode passant. La batterie 105 va alors se charger. Au cours de la charge, le microprocesseur 120 effectue régulièrement des mesures du niveau de charge de la batterie 105, afin de s'assurer que sa charge ne dépasse pas un seuil de destruction de la batterie 105.

La figure 3 illustre les cycles de commande des interrupteurs 111 et du transistor 109 par le microprocesseur 120. Le graphique de la figure 3 illustre en abscisse le temps, et en ordonné l'état de l'interrupteur 111 et du transistor 109. 0 signifie que l'interrupteur 111 et le transistor 109 sont ouvert, 1 signifie qu'ils sont fermés. A une date t0, choisie arbitrairement pour les besoins de la description, l'utilisateur 102 place son téléphone sur le chargeur 101. Le microprocesseur 120 détermine si la batterie 105 a besoin d'être chargée en mesurant son niveau de charge. Le microprocesseur 120 commande alors les interrupteurs 111 et le transistor 109 en position fermée jusqu'à une date t1. Puis le microprocesseur 120 effectue une nouvelle mesure, et si la batterie 105 a encore besoin d'être chargée, il commande une nouvelle durée de fermeture des interrupteurs 111 et du transistor 109 entre une date t2 et t3. Les dates t2 et t3 sont postérieures à t1, et t3 est postérieure à t2. Les opérations de mesure du niveau de charge de la batterie et de fermeture des interrupteurs 111 et du transistor 109 forment un cycle qui se répète jusqu'à ce qu'un seuil de charge soit atteint. Le seuil de charge est inférieur au seuil de destruction de la batterie 105.

Au fur et à mesure que la tension de charge de la batterie se rapproche du seuil de charge les durées de fermeture des interrupteurs 111 et du transistor 109 se réduisent. Soit d1 la durée de t0 à t1, d2 la durée de t2 à t3 et d3 la durée de t4 à t5. Alors d1 est supérieure à d2 qui est elle-même supérieure à d3. Il s'agit d'une charge en mode pulsé. Le fait que les durées soient décroissantes au fur et à mesure que la batterie se charge est rendu nécessaire par la volonté de s'approcher le plus possible du seuil de charge qui est lui-même proche du seuil de destruction de la batterie. En s'approchant de ce seuil progressivement, on diminue les risques de le dépasser.

Pour que ce mode de charge, dit pulsé, soit possible, et surtout efficace, il faut que le temps de commutation du circuit 103 soit rapide. Par temps de commutation 103, on entend le temps nécessaire à l'établissement du régime stationnaire sur le port de sortie 104 du dispositif 103 à partir du moment où le microprocesseur 120 a commandé la fermeture des interrupteurs 111 et du transistor 109. Ce paramètre est réglé par le choix de la valeur de la résistance 110. Plus le temps de commutation du circuit 103 sera faible, plus la charge de la batterie 105 sera rapide.

## Revendications

1. Téléphone (102) mobile comportant un circuit (103) perfectionné de charge d'une batterie (105) comportant:
- un générateur (115) de courant connecté entre une masse (106) et une première borne d'un **transistor bipolaire** (107) de commande,
- une résistance (110) connectée entre la première borne et une deuxième borne du dispositif de commande,
- un premier interrupteur (109) connecté entre la deuxième borne et la masse,
- une troisième borne du dispositif de commande est connectée à la batterie,
**caractérisé en ce que** la résistance est connectée en série, entre la première et la deuxième borne, avec un deuxième interrupteur (111).

2. Téléphone selon la revendication 1, **caractérisé en ce que** pour le transistor de type bipolaire, la première borne est l'émetteur du transistor, la deuxième est la base et la troisième est le collecteur.

3. Téléphone selon l'une des revendications 1 ou 2, **caractérisé en ce que** le premier interrupteur est réalisé par un transistor à effet de champ.

4. Téléphone selon l'une des revendications 1 à 3, **caractérisé en ce que** la tension de la batterie une fois chargée est inférieure ou égale à 5 volts.

5. Téléphone selon l'une des revendications 1 à 4, **caractérisé en ce qu'**il comporte des moyens (121) pour commander les interrupteurs.

6. Téléphone selon l'une des revendications 1 à 5, **caractérisé en ce que** la résistance est faible par rapport aux capacités parasites du dispositif de suppression, et le temps de commutation des interrupteurs est rapide, ces deux conditions permettent une charge de la batterie en mode pulsé.

## Claims

1. A mobile telephone (102) comprising an improved charge circuit (103) for a battery (105) comprising:
- a current generator (115) connected between a ground (106) and a first terminal of a bipolar control transistor (107).
- A resistance (110) connected between the first terminal and a second control device terminal,
- A first interrupter (109) connected between the second terminal and the ground,
- A third control device terminal is connected to the battery,
**characterized in that** the resistance is connected in series, between the first and second terminals, with a second interrupter (111).

2. The telephone according to claim 1, **characterized in that** for the bipolar type transistor, the first terminal is the transistor emitter, the second is the base and the third is the collector.

3. The telephone according to one of claims 1 or 2,
**characterized in that** the first interrupter is carried out by a field effect transistor.

4. The telephone according to one of claims 1 to 3,
**characterized in that** the voltage of the battery once charged is less than or equal to 5 volts.

5. The telephone according to one of claims 1 to 4,
**characterized in that** the telephone comprises means (121) for controlling the interrupters.

6. The telephone according to one of claims 1 to 5,
**characterized in that** as the resistance is low with relation to the stray capacitance of the suppression device, and the switching delay of the interrupters is rapid, these two conditions allow the battery to be charged in pulse mode.

## Patentansprüche

1. Mobiltelefon (102), das eine perfektionierte Schaltung (103) zum Aufladen einer Batterie (105) enthält, die Folgendes aufweist:
- einen Stromgenerator (115), der zwischen einer Masse (106) und einer ersten Klemme eines **zweipoligen Steuertransistors** (107) angeschlossen ist,
- einen Widerstand (110), der zwischen der ersten Klemme und einer zweiten Klemme der Steuervorrichtung angeschlossen ist,
- einen ersten Schalter (109), der zwischen der zweiten Klemme und der Masse angeschlossen ist,
- eine dritte Klemme der Steuervorrichtung ist an der Batterie angeschlossen,
**dadurch gekennzeichnet, dass** der Widerstand zwischen der ersten und der zweiten Klemme mit einem zweiten Schalter (111) in Serie geschaltet ist.

2. Mobiltelefon nach Anspruch 1, **dadurch gekennzeichnet, dass** die erste Klemme für den Transistor des zweipoligen Typs die erste Klemme der Sender des Transistors ist, die zweite Klemme die Basis und die dritte der Kollektor ist.

3. Mobiltelefon nach einem der Ansprüche 1 oder 2, **dadurch gekennzeichnet, dass** der erste Schalter aus einem Feldeffekttransistor besteht.

4. Mobiltelefon nach einem der Ansprüche 1 bis 3, **dadurch gekennzeichnet, dass** die Spannung der Batterie, sobald sie aufgeladen ist, kleiner oder gleich 5 Volt ist.

5. Mobiltelefon nach einem der Ansprüche 1 bis 4, **dadurch gekennzeichnet, dass** es Mittel (121) zum Steuern der Schalter aufweist.

6. Mobiltelefon nach einem der Ansprüche 1 bis 5, **dadurch gekennzeichnet, dass** der Widerstand im Vergleich zu den Störkapazitäten der Unterdrückungsvorrichtung gering und die Umschaltzeit der Schalter schnell ist, wobei diese zwei Bedingungen ein Aufladen der Batterie im gepulsten Modus erlauben.
